# EUROPEAN PATENT SPECIFICATION

(11) **EP 0 576 097 B1**
(45) Date of publication and mention of the grant of the patent: **27.11.1996**
(21) Application number: 93201818.7
(22) Date of filing: 23.06.1993
(51) Int. Cl.: B62H 1/04, B62H 5/00

(54) **Bicycle provided with a stand**
Fahrrad mit einem Ständer
Bicyclette munie d'un support

(30) Priority: 25.06.1992 NL 9201135
(43) Date of publication of application: 29.12.1993
(73) Proprietor: Lassche, Jakob, NL-7601 GE Almelo (NL)
(72) Inventor: Lassche, Jakob, NL-7601 GE Almelo (NL)
(74) Representative: Schumann, Bernard Herman Johan

(56) References cited:
- EP-A- 0 337 552
- GB-A- 3 542
- US-A- 2 251 639
- US-A- 4 055 060

## Description

The invention relates to a two-wheeled vehicle such as a bicycle, moped or motor cycle, comprising a frame with a saddle on which a user can take up position, a rear wheel rotatably drivable relative to that frame, a fork which is pivotable for steering under control of a user and which bears on its top end a handlebar and which bears on its bottom end, a freely rotatable front wheel, said vehicle comprising a generally U-shaped stand fixed in the region of the front wheel to the fork, situated with two legs on either side of the front wheel and pivotable in a vertical plane round a pivot axis extending in the region of the lower end of the fork, which stand can be placed at choice by the user into one of two stable positions, in the first of which the active outer ends of the two legs protrude below the lowest part of the front wheel to support on the ground and in the second of which the two legs are pivoted out of the said first position.

Such a vehicle is known from US-A-2 251 639.

Relative to the technique according to this prior art specification it is a purpose of the invention to design the vehicle such that in the rest position of the stand, i.e. the position in which the vehicle can be ridden, it takes a position, in which the user is not in any way hindered by the stand.

It is a further purpose of the invention to design a vehicle such that offers the possibility of combining the function of stand with anti-theft security.

The above purposes are realized with a vehicle according to the above-given specification, which is characterized in that a lock is fixedly connected or connectable to the frame and in the first position can lock the upper part of the stand relative to that frame while simultaneously locking the fork relative to the frame;
and
the bottom end of each of the legs is pivotable round the axis of the relevant leg and has a part protruding to the side which bears the active outer end for placing on the ground, which protruding part in the first position of the stand assumes a first pivot position in which the protruding part protrudes to the side in relation to the front wheel and in the second position of the stand assumes a second pivot position in which the protruding part is pivoted inward in relation to the front wheel.

In this structure according to the invention the mutual distance of the active end of the sand in the first position is as great as possible and in the non-active riding position is as small as possible.

This construction according to the invention makes it extremely difficult to steal a vehicle which is parked and locked with the stand and lock according to the invention. In the relevant position of the stand the front wheel can only be moved by lifting the front wheel off the ground such that the active ends of the stand no longer make any contact therewith. As will be apparent, it is also impossible to turn the handlebar.

The great stability of a parked vehicle according to the invention and its vertical position enables very simple loading of the luggage carrier placed above the rear wheel. In addition, the usual lock situated normally under the saddle forwardly of the luggage carrier can be omitted if desired, which facilitates loading of the vehicle.

Preference is given to an embodiment which is characterized by first spring means which can urge the stand to each of both the stable positions.

In a particular embodiment the vehicle according to the invention has the feature that in the second position the outer ends of the legs are pivoted rearward and upward. This embodiment has the advantage that after release of the lock the vehicle can be placed in ready-to-ride position by being moved forward over a small distance. The stand is hereby carried from its first parking position to its inactive riding position.

A variant is characterized by second spring means which urge the protruding part to one of the said pivot positions corresponding with one of the positions of the stand, and stop means arranged on the fork column which coact with the protruding part such that when the stand is displaced to the other position the stop means press the protruding part to the other pivot position counter to the action of the spring means. This embodiment is preferably designed such that the second spring means urge the protruding parts inward. This prevents any possibility of these protruding parts being pressed inward by people of malicious intent in the parked position of the vehicle. The stop means then block such an inward displacement.

The said embodiment can very simply display the special feature that the second spring means comprise a torsion spring.

An embodiment is recommended in which the first spring means comprise a pressure spring which is disposed between the frame and the stand such that it exerts a pressure force in both positions, while an unstable position is situated between these positions.

Light and reliable is a variant in which the first spring means comprise a gas spring.

In preference the vehicle according to the invention has the feature that the lock is a commercially available bicycle lock.

A particular embodiment has the special feature that the stand comprises a closing part for co-action with the lock and that guide means are present for positioning that closing part in relation to the lock such that the lock can block the movement of that closing part.

Great ease of operation is offered by the embodiment in which the stand comprises an actuating part on which a pressure force can be exerted by the user with the foot to carry the stand from the second position into the first position.

The invention will now be elucidated with reference to the annexed drawings, wherein:
figure 1 shows a side view of a part of a bicycle according to the invention in parking position;
figure 2 shows a front view of the bicycle according to figure 1;
figure 3 shows a side view corresponding with figure 1 in the riding position;
figure 4 shows a view corresponding with figure 2 of the riding position;
figure 5 shows a side view corresponding with figure 1 of a variant in parking position;
figure 6 shows a view corresponding with figure 3 of the variant of figure 5 in riding position;
figure 7 is a partly broken away view of the construction of the lock with the associated closing part of the stand in non-blocked situation;
figure 8 shows a view corresponding with figure 7 of the locked situation;
figure 9 shows a view corresponding with figure 8 of a variant;
figure 10 is a partly broken away side view of the structure according to figure 9;
figure 11 is a partly broken away side view of a part of the vehicle in the position according to figure 1;
figure 12 shows a view corresponding with figure 11 in the position according to figure 3;
figure 13 is a schematic front view corresponding with figure 2 in elucidation of a number of dimensioning features; and
figure 14 is a schematic side view corresponding with figure 3 in elucidation of a number of dimensioning features.

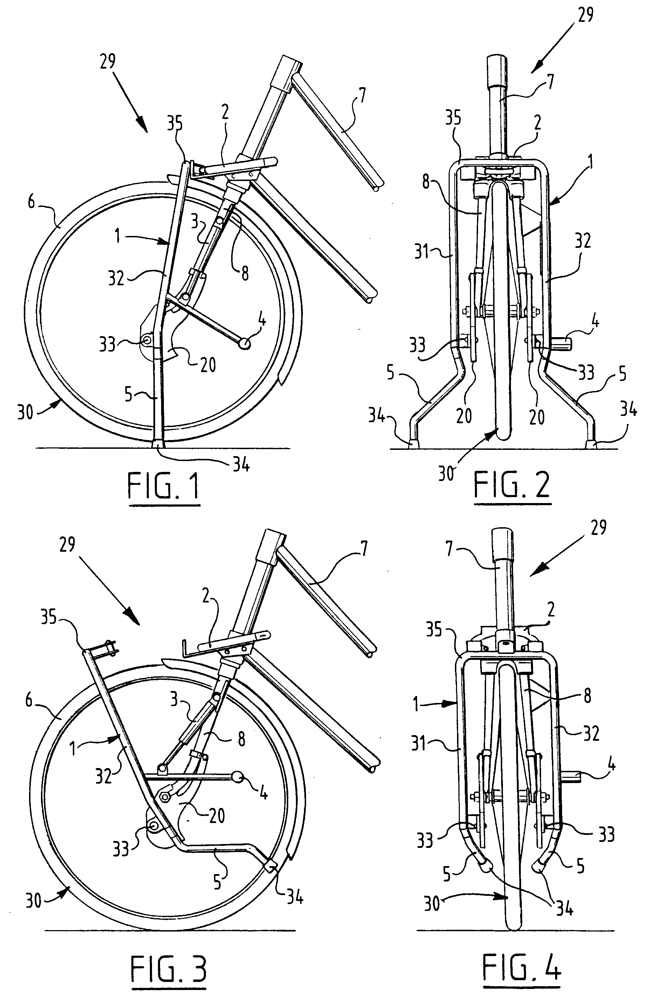

Figures 1, 2, 3 and 4 show a part of a bicycle 29. This bicycle comprises a frame 7 with a saddle (not drawn) on which a user can take up position, a rear wheel (not drawn) rotatably drivable relative to that frame 7, a fork column which is pivotable for steering under the control of a user and which bears on its top end a handlebar (not drawn) and which bears on its bottom end, by means of a fork, a freely rotatable front wheel 30 with a tyre 6.

The bicycle 29 comprises a stand 1 fixed in the region of the front wheel 30 to the fork 8 by means of a mounting plate 20. Stand 1 is generally U-shaped, is situated with its two legs 31, 32 on either side of front wheel 30 and is pivotable in a vertical plane round a pivot axis 33 in the region of the bottom end of fork 8. The stand 1 can be placed at choice by the user in one of two stable positions. In the first position the active outer ends 34 of the hereinafter described protruding parts 5 of stand 1 protrude beneath the lowest part of front wheel 30. In the second position the two legs 31, 32 are pivoted out of the said first position.

Figures 1 and 2 show the first position in which the bicycle is parked and supports on the outer ends 34 and the rear wheel. Figures 3 and 4 show the second position in which the bicycle can be ridden. It is noted that the dimensioning of the construction according to the invention is such that according to figure 4 the outer ends 34 are situated within the radius of wheel 30 with tyre 6, whereby passing over step-like elevations such as kerbs and the like is not affected by the presence of the stand 1.

Fixedly connected to the frame 7 is a normal bicycle lock 2. In the first position shown in figures 1 and 2 the lock 2 locks the upper part 35 of stand 1 in relation to that frame 7 while simultaneously locking the fork column in relation to the frame 7.

Gas springs 3 are arranged between fork 8 and legs 31, 32. These gas springs, which exert a pressure force, carry the stand 1 to each of both stable positions according to figures 1 and 3. It will be apparent that due to the transition from the first stable position according to figure 1 to the second stable position according to figure 3 the gas spring passes through a state of maximum compression. Two stable positions are hereby defined, on the one side determined by the movement locking by the lock 2 and on the other side by the maximum length of gas spring 3.

In the situation of figures 1 and 2 the stand 1 is locked in relation to the frame 7 by means of the lock 2. The gas spring 3 presses the upper part of stand 1 into the lock 2. In order to reach this position the user can apply in the position shown in figure 3 a downward directed pressure force with his foot on an actuating arm 4 present for that purpose. In order to re-place the stand from the position according to figure 1 into the position according to figure 3 the bicycle can, after deactivation of lock 2, be moved forward over a short distance.

Through this small forward movement the stand 1 folds into the position shown in figure 3 due to the action of gas spring 3.

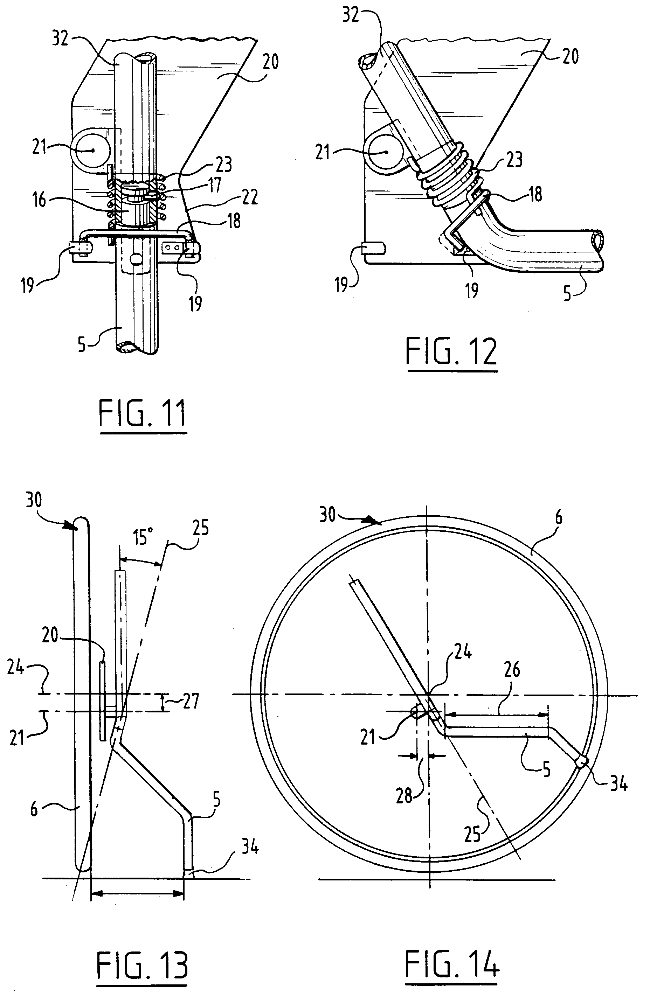

As will be apparent from a comparison between figures 1 and 3 and figures 2 and 4, not only a vertical pivoting of stand 1 takes place but a pivoting of the protruding parts 5 on the underside of legs 31, 32 also occurs, whereby in the first position according to figures 1 and 2 the active outer ends have a relatively large mutual distance and in the second position according to figures 3 and 4 a retracted position in which the stand occupies only a small space. Attention will be focussed on this aspect with reference to figures 11 and 12.

Figures 1, 2, 3 and 4 relate to an embodiment in which the U-shaped bracket 31, 32, 35 of stand 1 is situated in front of the fork 8.

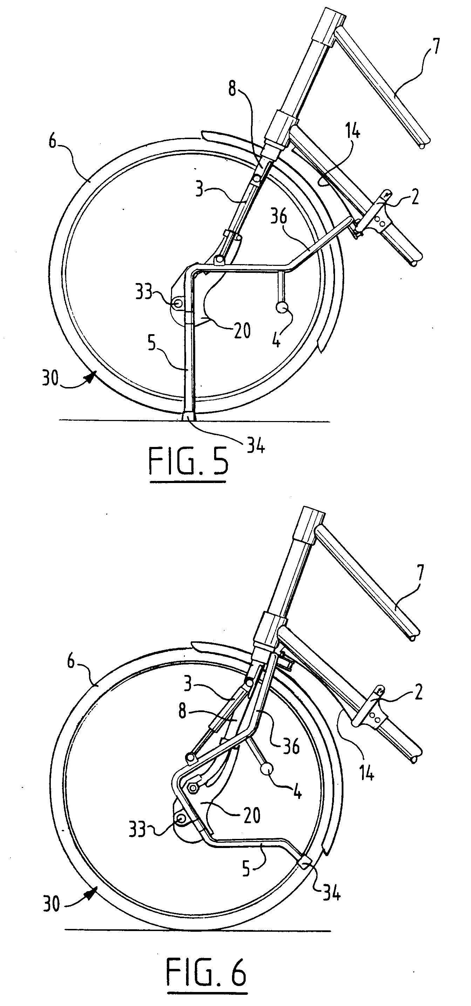

Figure 5 shows a variant in which the U-shaped bracket designated 36 is situated behind fork 8.

Figure 5 shows the first position corresponding with figure 1, while figure 6 shows the second position corresponding with figure 3. Functionally similar components are designated with the same reference numerals as in figures 1, 2, 3 and 4. A description will not be repeated here.

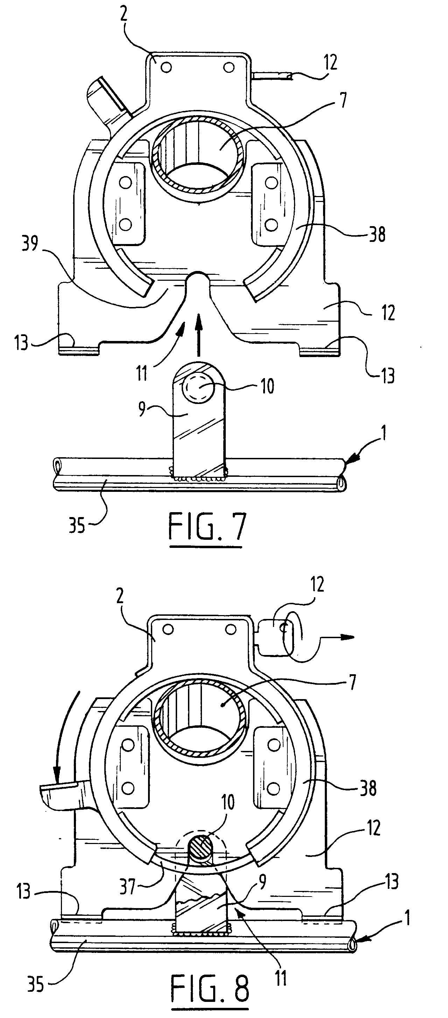

Figure 7 shows on enlarged scale the manner in which the upper part 35 of the stand can co-act for locking with the lock 2.

The lock 2 is fastened to frame 7 by means of a mounting plate 12. The lock is of the normal type, wherein an arcuate closing pin 37 can form together with a guiding 38 a closed ring, through the access opening 39 of which a closing roller 10 can pass. This closing roller 10 is carried by a lip 9 which is fixed to the upper part 35 of stand 1. As shown in figures 7 and 8, the mounting plate 12 has a generally V-shaped tapering recess 11 which defines the substantially clearance-free positioning of the roller 10 inside lock 2. In the closed situation retraction of the roller 10 is blocked by the closing pin 37. In this situation the operating key 12 can be removed by the user.

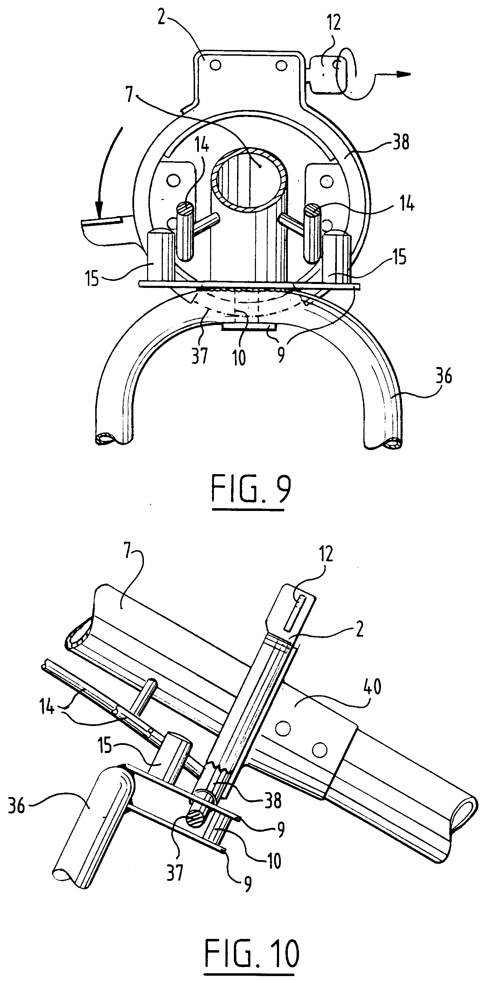

Figures 9 and 10 shows guides 14 which are arranged on frame 7. The bracket 36 bears a closing portion 9 with a closing roller 10 which, analogously of the construction shown in figures 7 and 8, can co-act with lock 2. This lock 2 is fixed to frame 7 by means of a mounting plate 40.

Figures 11 and 12 show the construction enabling pivoting of stand 1 between both positions and also the corresponding manner of pivoting of the protruding parts 5.

A shaft 16 is fixedly connected to the protruding part 5. The shaft is coaxially rotatable in the leg 32 and is held in its axial position by means of a pin 17. In the position shown in figure 12 the torsion spring 23 urges the protruding part 5 to the folded-in position. When the user presses stand 1 to the position according to figure 11 using the arm 4, an actuating part 18 fixedly welded to the protruding part 5 presses against a sloping side 22 of mounting plate 20. A rotational force is hereby exerted on that protruding part 5, whereby the part is placed in its parking position as in figure 2. Fixed to the mounting plate 20 are lips 19 which lock the bent ends of actuating part 18 relative to mounting plate 20. This construction makes it extra difficult for malicious persons to force the construction.

Figures 13 and 14 show dimensional details. It is of particular importance that the protruding parts 5 in the position of figure 2 are situated under the lowest part of the tyre 6 and in the position according to figure 3 shown in figure 14 remain inside the radius of this tyre 6. Figure 13 shows the sloping disposition of the rotational axis at an angle of about 15°. It is also apparent that the pivot axis 21 is located below the axis 24 of wheel 30. Figure 14 shows that by rotating the protruding parts 5 round the sloping axis 25 of leg 33 the active outer ends 34 are situated within the radius of the wheel.

It will be apparent that within the given scope of the invention there are diverse design and dimensioning options. What are important are the above mentioned angle, which in this embodiment amounts to about 15°, the length 26 of the protruding parts 5 and the difference in the distance between the points of rotation of the wheel (21) and the stand (28).

The stand according to the invention provides an outstanding stability during arranging of a shopping cart on the luggage carrier, loading of the bicycle with bags on the luggage carrier, loading of the bicycle with a basket on the front and placing children on the bicycle and taking them off the bicycle.

## Claims

1. Two-wheeled vehicle such as a bicycle (29), moped or motor cycle, comprising a frame (7) with a saddle on which a user can take up position, a rear wheel rotatably drivable relative to that frame (7), a fork (8) which is pivotable for steering under control of a user and which bears on its top end a handlebar and which bears on its bottom end, a freely rotatable front wheel (30), said vehicle comprising a generally U-shaped stand (1) fixed in the region of the front wheel (30) to the fork (8), situated with two legs (31, 32) on either side of the front wheel (30) and pivotable in a vertical plane round a pivot axis (33) extending in the region of the lower end of the fork (8), which stand (1) can be placed at choice by the user into one of two stable positions, in the first of which the active outer ends (34) of the two legs (31, 32) protrude below the lowest part of the front wheel (39) to support on the ground and in the second of which the two legs (31, 32) are pivoted out of the said first position,
characterized in that
a lock (2) is fixedly connected or connectable to the frame (7) and in the first position can lock the upper part (35) of the stand (1) relative to that frame (7) while simultaneously locking the fork (8) relative to the frame;
and
the bottom end of each of the legs (31, 32) is pivotable round the axis of the relevant leg and has a part (5) protruding to the side which bears the active outer end (34) for placing on the ground, which protruding part (5) in the first position of the stand (1) assumes a first pivot position in which the protruding part (5) protrudes to the side in relation to the front wheel (30) and in the second position of the stand (1) assumes a second pivot position in which the protruding part (5) is pivoted inward in relation to the front wheel (30).

2. Vehicle as claimed in claim 1, characterized in that the spring means (3) which can urge the stand (1) to each of both stable positions.

3. Vehicle as claimed in claim 1, characterized in that in the second position the outer ends (34) of the legs (31, 32) are pivoted rearward and upward.

4. Vehicle as claimed in claim 1, characterized by second spring means (23) which urge the protruding part (5) to one of the said pivot positions corresponding with one of the positions of the stand (1), and stop means (20) arranged on the fork (8) column which co-act with the protruding part (5) such that when the stand (1) is displaced to the other position the stop means (20) press the protruding part (5) to the other pivot position counter to the action of the spring means (23).

5. Vehicle as claimed in claim 4, characterized in that the second spring means comprise a torsion spring (23).

6. Vehicle as claimed in claim 2, characterized in that the first spring means (3) comprise a pressure spring which is disposed between the frame (7) and the stand (1) such that it exerts a pressure force in both positions, while an unstable position is situated between these positions.

7. Vehicle as claimed in claim 2, characterized in that the first spring means comprise a gas spring (3).

8. Vehicle as claimed in claim 1, characterized in that the lock (2) is a commercially available bicycle lock.

9. Vehicle as claimed in claim 1, characterized in that the stand (1) comprises a closing part (9, 10) for co-action with the lock (2) and that guide means (11, 12) are present for positioning that closing part (9, 10) in relation to the lock (2) such that the lock (2) can block the movement of that closing part (9, 10).

10. Vehicle as claimed in claim 1, characterized in that the stand (1) comprises an actuating part (4) on which a pressure force can be exerted by the user with the foot to carry the stand (1) from the second position into the first position.

## Patentansprüche

1. Zweirädriges Fahrzeug, wie ein Fahrrad (29), Moped oder Motorrad, mit einem Rahmen (7) mit einem Sattel, auf welchem eine Bedienperson ihre Position einnehmen kann, einem Hinterrad, das relativ zu dem Rahmen (7) drehend antreibbar ist, einer Gabel (8), welche zum Lenken unter Steuerung von einer Bedienperson schwenkbar ist und welche an ihrem oberen Ende eine Lenkstange trägt und welche an ihrem unteren Ende ein frei drehbares Vorderrad (30) trägt, wobei das Fahrzeug einen insgesamt U-förmigen Ständer (1) aufweist, der in dem Bereich des Vorderrades (30) an der Gabel (8) befestigt ist, und mit zwei Schenkeln (31, 32) beiderseits des Vorderrades (30) angebracht ist und in einer vertikalen Ebene um eine Schwenkachse (33) schwenkbar ist, die sich in dem Bereich des unteren Endes der Gabel (8) erstreckt, wobei der Ständer (1) vorzugsweise von einer Bedienperson in eine der zwei festen Positionen gebracht werden kann, in deren erster Position die aktiven äußeren Enden (34) der beiden Schenkel (31, 32) unter dem untersten Teil des Vorderrades (30) zur Abstützung an dem Boden hervorstehen und in deren zweiter Position die beiden Schenkel (31, 32) aus der ersten Position geschwenkt sind, **dadurch gekennzeichnet,** daß
ein Schloß (2) mit dem Rahmen (7) fest verbunden oder verbindbar ist und in der ersten Position den oberen Teil (35) des Ständers (1) relativ zu dem Rahmen (7) verriegeln kann, während es gleichzeitig die Gabel (8) relativ zu dem Rahmen verriegelt;
das untere Ende jedes der Schenkel (31, 32) um die Achse des betreffenden Schenkels schwenkbar ist und einen Teil (5) aufweist, welcher zu derjenigen Seite hin hervorsteht, welche das aktive äußere Ende (34) zum Aufsetzen auf den Boden trägt, wobei der vorstehende Teil (5) in der ersten Position des Ständers (1) eine erste Schwenkposition einnimmt, in welcher der vorstehende Teil (5) zu der Seite in bezug auf das Vorderrad (30) hervorsteht und in der zweiten Position des Ständers (1) eine zweite Schwenkposition einnimmt, in welcher der vorstehende Teil (5) nach innen in bezug auf das Vorderrad (30) geschwenkt ist.

2. Fahrzeug nach Anspruch 1, **gekennzeichnet durch** erste Federmittel (3), welche den Ständer (1) in jede der beiden festen Positionen bringen können.

3. Fahrzeug nach Anspruch 1, **dadurch gekennzeichnet**, daß in der zweiten Position die äußeren Enden (34) der Schenkel (31, 32) nach hinten und nach oben geschwenkt sind.

4. Fahrzeug nach Anspruch 1, **gekennzeichnet durch** zweite Federmittel (23), welche den vorstehenden Teil (5) in eine der Schwenkpositionen bringen, die einer der Positionen des Ständers (1) entspricht, und Anschlagmittel (20), die an der Gabel (8) angeordnet sind, welche derart mit dem vorstehenden Teil (5) zusammenwirken, daß, wenn der Ständer (1) in eine andere Position verlagert wird, die Anschlagmittel (20) den vorstehenden Teil (5) in die andere Schwenkposition entgegen der Wirkung der Federmittel (23) drücken.

5. Fahrzeug nach Anspruch 4, **dadurch gekennzeichnet**, daß die zweiten Federmittel eine Torsionsfeder (23) aufweisen.

6. Fahrzeug nach Anspruch 2, **dadurch gekennzeichnet**, daß die ersten Federmittel (3) eine Druckfeder aufweisen, welche zwischen dem Rahmen (7) und dem Ständer (1) derart angeordnet ist, daß sie eine Druckkraft in beide Positionen ausübt, während eine instabile Position zwischen diesen Positionen vorliegt.

7. Fahrzeug nach Anspruch 2, **dadurch gekennzeichnet**, daß die ersten Federmittel eine Gasfeder (3) aufweisen.

8. Fahrzeug nach Anspruch 1, **dadurch gekennzeichnet**, daß das Schloß (2) ein handelsübliches Fahrradschloß ist.

9. Fahrzeug nach Anspruch 1, **dadurch gekennzeichnet**, daß der Ständer (1) ein Verschlußteil (9, 10) zum Zusammenwirken mit dem Schloß (2) aufweist und daß Führungsmittel (11, 12) zum Positionieren des Verschlußteils (9, 10) in bezug auf das Schloß (2) derart vorhanden sind, daß das Schloß (2) die Bewegung des Verschlußteils (9, 10) blockieren kann.

10. Fahrzeug nach Anspruch 1, **dadurch gekennzeichnet**, daß der Ständer (1) ein Betätigungsteil (4) aufweist, auf welches eine Druckkraft von der Bedienperson mit dem Fuß ausgeübt werden kann, um den Ständer (1) aus der zweiten Position in die erste Position zu führen.

## Revendications

1. Véhicule à deux roues telle qu'une bicyclette (29), un cyclomoteur ou un cycle à moteur, comprenant un cadre (7) muni d'une selle sur laquelle un utilisateur peut prendre position, une roue arrière pouvant être entraînée en rotation par rapport au cadre (7), une fourche (8) qui peut pivoter pour diriger le véhicule sous la commande de l'utilisateur et qui porte à son extrémité supérieure un guidon et qui porte à son extrémité inférieure une roue avant (30) pouvant tourner librement, le véhicule comprenant un support (1) ayant une forme générale en U fixé, dans la région de la roue avant (30), à la fourche (8), situé de manière que deux jambes (31, 32) s'étendent de chaque côté de la roue avant (30) et pouvant pivoter dans un plan vertical autour d'un axe (33) de pivot s'étendant dans la région de l'extrémité inférieure de la fourche (8), le support (1) pouvant être placé, au choix par l'utilisateur, dans l'une de deux positions stables, dans la première desquelles les extrémités externes actives (34) des deux jambes (31, 32) font saillie en dessous de la partie la plus basse de la roue avant (39) pour s'appuyer sur le sol et dans la seconde desquelles les deux branches (31, 32) sont basculées à l'écart de la première position, caractérisé en ce que:
un verrou (2) est relié de façon fixe ou peut être relié au cadre (7) et, dans la première position, peut verrouiller la partie supérieure (35) du support (1) relativement au cadre (7) tout en verrouillant simultanément la fourche (8) relativement au cadre;
l'extrémité inférieure de chacune des jambes (31, 32) peut pivoter autour d'un axe de la jambe correspondante et comporte une partie (5) faisant saillie vers le côté qui porte l'extrémité externe active (34) pour la mise en place sur le sol, la partie (5) faisant saillie, conditionnant, dans la première position du support (1), une première position de pivot dans laquelle la partie (5) faisant saillie fait saillie vers le côté en relation avec la roue avant (30), et conditionnant, dans la seconde position du support (1), une seconde position de pivot dans laquelle la partie (5) faisant saillie est basculée vers l'intérieur en relation avec la roue avant (30).

2. Véhicule selon la revendication 1, caractérisé en ce que les moyens (3) à ressort peuvent solliciter le support (1) vers chacune des deux positions stables .

3. Véhicule selon la revendication 1, caractérisé en ce que, dans la seconde position, les extrémités externes (34) des jambes (31, 32) sont basculées vers l'arrière et vers le haut.

4. Véhicule selon la revendication 1, caractérisé par des second moyens (23) à ressort sollicitant la partie saillante (5) vers l'une des positions de pivot en correspondance avec l'une des positions du support (1), et des moyens d'arrêt agencés sur la colonne de fourche (8) qui coopèrent avec la partie saillante (5), de manière que, lorsque le support (1) est déplacé vers l'autre position, les moyens d'arrêt pressent la partie saillante (5) vers l'autre position de pivot à l'encontre de l'action des moyens (23) à ressort.

5. Véhicule selon la revendication 4, caractérisé en ce que les second moyens à ressort comprennent un ressort (23) de torsion.

6. Véhicule selon la revendication , caractérisé en ce que les premier moyens (3) à ressort comprennent un ressort de pression qui est disposé entre le cadre (7) et le support (1), de manière qu'il exerce une force de pression dans les deux positions, alors qu'une position instable est située entre ces positions.

7. Véhicule selon la revendication 2, caractérisé en ce que les premier moyens à ressort comprennent un ressort à gaz (3).

8. Véhicule selon la revendication 1, caractérisé en ce que le verrou (2) est un verrou de bicyclette disponible dans le commerce.

9. Véhicule selon la revendication 1, caractérisé en ce que le support (1) comprend une partie de fermeture (9, 10) destinée à coopérer avec le verrou (2), et en ce que des moyens de guidage (11, 12) sont présents pour positionner cette partie de fermeture (9, 10) en relation avec le verrou (2), de manière que le verrou (2) puisse bloquer le mouvement de cette partie de fermeture (9, 10).

10. Véhicule selon la revendication 1, caractérisé en ce que le support (1) comprend une partie d'actionnement (4) sur laquelle une force de pression peut être exercée par l'utilisateur avec le pied pour amener le support (1) depuis sa seconde position vers sa première position.
